# FASCICULE DE BREVET EUROPEEN

(11) **EP 2 530 403 B1**
(45) Date de publication et mention de la délivrance du brevet: **21.01.2015**
(21) Numéro de dépôt: 11168125.0
(22) Date de dépôt: 30.05.2011
(51) Int. Cl.: F24J 2/52

(54) **Structure de montage, système de récupération d'énergie solaire comprenant une telle structure, installation comprenant un tel système et procédé de montage utilisant une telle structure**
Montagestruktur, Solarenergie-Rückgewinnungssystem, das mit einer solchen Struktur ausgestattet ist, Anlage, die mit einem solchen System ausgestattet ist und Montageverfahren, bei dem eine solche Struktur zum Einsatz kommt
Mounting structure, system for collecting solar power including such a structure, facility including such a system and mounting method using such a structure

(43) Date de publication de la demande: 05.12.2012
(73) Titulaire: SunPower Corporation, San Jose CA 95134 (US)
(72) Inventeur: Micallef, Yann, 69005 Lyon (FR)
(74) Mandataire: Grünecker, Kinkeldey, Stockmair & Schwanhäusser

(56) Documents cités:
- EP-A1- 2 295 893
- AT-U1- 5 916
- DE-U1- 20 209 032
- DE-U1-202009 004 286
- JP-A- 2008 014 038
- JP-A- 2009 263 874

## Description

L'invention se rapporte à une structure de montage, à un système de récupération d'énergie solaire comprenant une telle structure, à une installation comprenant un tel système et à un procédé de montage utilisant une telle structure.

En particulier, l'invention se rapporte à une structure de montage pour monter au moins un panneau de récupération d'énergie solaire sur un support, ledit panneau de récupération présentant au moins un bord, ladite structure de montage comprenant:
- au moins un profilé de montage qui comporte :
   un socle présentant une surface de base plane et destinée à reposer sur le support, ledit socle comprenant au moins un premier élément d'ancrage formant l'un des éléments choisis parmi un élément mâle et un élément femelle adaptés pour coopérer l'un avec l'autre, ledit premier élément d'ancrage s'étendant parallèlement à la surface de base,
   une partie de maintien s'étendant perpendiculairement à la surface de base du socle et adaptée pour maintenir le bord du panneau de récupération,
- au moins un organe de fixation adapté pour fixer localement le profilé de montage au support, ledit organe de fixation étant adapté pour être fixé sur le support et présentant une première surface d'appui plane agencée pour pouvoir reposer sur le support, ledit organe de fixation comprenant au moins un deuxième élément d'ancrage formant l'autre élément choisi parmi ledit élément mâle et ledit élément femelle, ledit deuxième élément d'ancrage s'étendant parallèlement à la première surface d'appui.

Une telle structure de montage est connue par exemple du document JP-2009 263 874 A.

Or le support peut présenter un défaut de planéité et une distance entre le socle du profilé de montage et le support peut varier sur toute une longueur. Les structures de montage connues du type précité ne permettent pas d'assurer une fixation satisfaisante du profilé de montage sur le support dans une telle situation.

L'invention vise à pallier les problèmes évoqués ci-dessus.

A cet effet, l'invention propose une structure de montage du type précité dans laquelle l'organe de fixation présente une deuxième surface d'appui plane, parallèle et opposée à la première surface d'appui, ladite deuxième surface d'appui étant agencée pour pouvoir reposer sur le support, l'organe de fixation étant adapté pour que le deuxième élément d'ancrage coopère avec le premier élément d'ancrage lorsque la première surface d'appui repose sur le support et lorsque la deuxième surface d'appui repose sur le support, le deuxième élément d'ancrage étant décalé par rapport à un plan médian de l'organe de fixation parallèle aux première et deuxième surfaces d'appui.

Ainsi, le choix de l'une ou l'autre des première et deuxième surfaces d'appui avec laquelle l'organe de fixation repose sur le support permet d'adapter une hauteur du deuxième élément d'ancrage à la distance entre le socle du profilé de montage et le support pour ainsi compenser localement le défaut de planéité du support. La structure de montage selon l'invention offre alors une fixation satisfaisante du profilé de montage sur le support malgré le défaut de planéité du support.

Pour améliorer l'adaptabilité de la structure de montage au défaut de planéité du support en augmentant les possibilités de réglage de la hauteur du deuxième élément d'ancrage, l'organe de fixation peut comprendre deux deuxièmes éléments d'ancrage s'étendant dans des sens opposés et placés à des distances différentes du plan médian. En fonction de l'orientation de l'organe de fixation, le deuxième élément d'ancrage peut être placé à différentes hauteurs.

Pour simplifier le repérage de l'orientation appropriée de l'organe de fixation, le deuxième élément d'ancrage peut présenter deux surfaces d'ancrage parallèles aux première et deuxième surfaces d'appui, au moins l'une des surfaces d'ancrage portant un élément de repérage distinguant ladite surface d'ancrage de l'autre surface d'ancrage.

Dans un mode de réalisation, le premier élément d'ancrage forme l'élément femelle ménagé sur une surface latérale du socle du profilé de montage et le deuxième élément d'ancrage forme l'élément mâle s'étendant depuis une surface latérale de l'organe de fixation destinée à être placée en regard de la surface latérale du socle. En particulier, le premier élément d'ancrage peut être une rainure s'étendant le long du socle du profilé de montage et le deuxième élément d'ancrage peut être une ailette.

Par ailleurs, l'organe de fixation peut comprendre des éléments de positionnement adaptés pour caler ledit organe de fixation sur un autre organe de fixation identique lorsque lesdits organes de fixation sont superposés. En particulier, les éléments de positionnement peuvent comprendre des premier et deuxième pieds formés respectivement sur des première et deuxième faces opposées de l'organe de fixation, lesdits premier et deuxième pieds portant respectivement les première et deuxième surfaces d'appui, le premier pied comportant un évidement ménagé dans la première surface d'appui et adapté pour recevoir le deuxième pied de l'autre organe de fixation identique. La superposition d'organe de fixation permet d'augmenter encore les possibilités de réglage de la hauteur du deuxième élément d'ancrage et ainsi d'améliorer encore l'adaptabilité de la structure de montage au défaut de planéité du support.

Selon un deuxième aspect, l'invention propose un système de récupération d'énergie solaire comprenant une structure de montage telle que définie précédemment et au moins un panneau de récupération d'énergie solaire, ledit panneau de récupération présentant au moins un bord maintenu dans la partie de maintien du profilé de montage.

Selon un troisième aspect, l'invention propose une installation comprenant un support et un système de récupération d'énergie solaire tel que défini ci-dessus, la surface de base du socle du profilé de montage reposant sur le support, l'organe de fixation étant fixé au support, l'une des première et deuxième surfaces d'appui reposant sur le support et le deuxième élément d'ancrage coopérant avec le premier élément d'ancrage.

Selon un quatrième aspect, l'invention propose un procédé de montage d'au moins un panneau de récupération d'énergie solaire sur un support par l'intermédiaire d'une structure de montage telle que définie précédemment, ledit procédé de montage comprenant les étapes consistant à :
A- poser la surface de base du socle du profilé de montage sur le support,
B- choisir l'une des première et deuxième surfaces d'appui de l'organe de fixation en fonction d'une distance entre le socle du profilé de montage et le support, poser ladite surface d'appui sur le support et faire coopérer le premier élément d'ancrage du profilé de montage et le deuxième élément d'ancrage de l'organe de fixation,
C- fixer l'organe de fixation sur le support,
D- maintenir un bord du panneau de récupération dans la partie de maintien du profilé de montage.

Lorsque l'organe de fixation comprend deux deuxièmes éléments d'ancrage s'étendant dans des sens opposés et placés à des distances différentes du plan médian, on peut prévoir que l'étape B comprenne en outre : choisir une orientation de l'organe de fixation en fonction de la distance entre le socle du profilé de montage et le support.

D'autres objets et avantages de l'invention apparaîtront à la lecture de la description qui suit de modes de réalisation particuliers de l'invention donnés à titre d'exemple non limitatif, la description étant faite en référence aux dessins annexés dans lesquels :
- la figure 1 est une représentation en perspective d'une installation comprenant un support sous la forme d'une charpente d'un toit, et un système de récupération d'énergie solaire comprenant des panneaux de récupération d'énergie solaire et une structure de montage des panneaux de récupération sur la charpente,
- la figure 2 est une représentation en coupe selon l'orientation référencée II-II sur la figure 1, illustrant notamment une section transversale d'un profilé de montage de la structure de montage,
- la figure 3 est une représentation en coupe selon l'orientation référencée III-III sur la figure 1, illustrant notamment une section transversale d'une traverse de la structure de montage,
- la figure 4 est une représentation en perspective d'un premier mode de réalisation d'un organe de fixation de la structure de montage de la figure 1, l'organe de fixation permettant de fixer le profilé de montage de la figure 2 sur la charpente,
- la figure 5 est une représentation en vue de face de l'organe de fixation de la figure 4,
- la figure 6 est une représentation agrandie du détail référencé VI sur la figure 1, illustrant la fixation du profilé de montage sur la charpente par l'intermédiaire de deux organes de fixation de la figure 4, et le positionnement de la traverse par rapport au profilé de montage,
- la figure 7 est une représentation en coupe selon l'orientation référencée VII-VII sur la figure 6, illustrant la coopération de premiers éléments d'ancrage, sous la forme de rainures, du profilé de montage avec des deuxièmes éléments d'ancrage, sous la forme d'ailettes, des organes de fixation pour assurer la fixation du profilé de montage sur la charpente,
- la figure 8 est une représentation en perspective d'un deuxième mode de réalisation de l'organe de fixation,
- la figure 9 est une vue de face de l'organe de fixation de la figure 8,
- la figure 10 est une vue de face de deux organes de fixation de la figure 8 superposés,
- la figure 11 est une représentation en perspective illustrant différents agencements d'un ou plusieurs organes de fixation de la figure 8 pour obtenir différentes hauteurs du deuxième élément d'ancrage par rapport à une surface d'appui reposant sur la charpente.

Sur les figures, les mêmes références désignent des éléments identiques ou analogues.

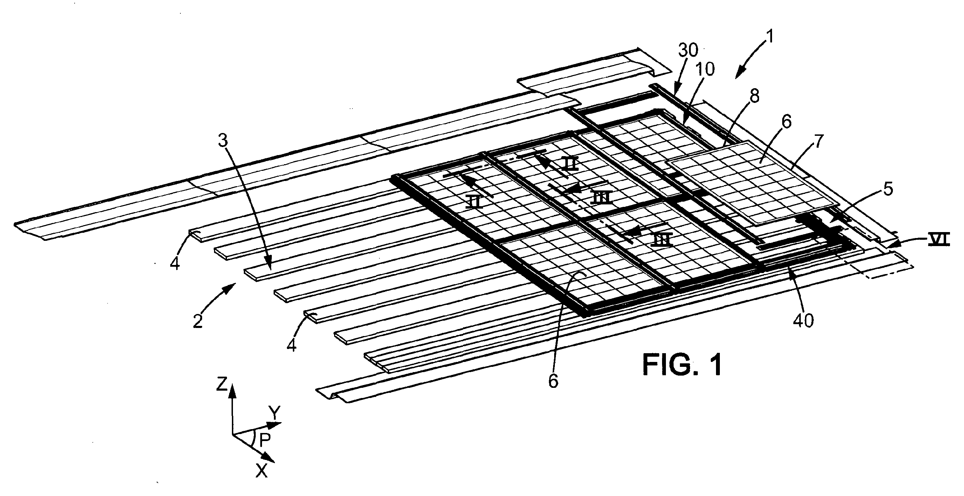

La figure 1 représente une installation 1 comprenant un support 2 et un système de récupération d'énergie solaire 5 monté sur le support 2.

Dans le mode de réalisation représenté, le support 2 est une charpente d'un toit d'un bâtiment. La charpente 2 présente un faîte depuis lequel s'étend au moins un pan 3 en pente, avec une inclinaison généralement comprise en 10° et 80°. Le pan 3 de la charpente 2 comprend des pannes 4, au nombre de sept sur la figure 1, s'étendant parallèlement les unes aux autres, transversalement à la pente, et supportées par une ou plusieurs poutres, non représentées, s'étendant dans le sens de la pente. Dans d'autres modes de réalisation, le support 2 pourrait également être un châssis présentant une pente ou non, et destiné à être posé sur une charpente, sur une façade d'un bâtiment, sur un sol ou toute autre surface.

Le système de récupération d'énergie solaire 5 est monté sur le pan 3 de la charpente 2. Pour la suite de la description, le pan 3 sur lequel le système de récupération d'énergie solaire 5 est monté établit un plan P défini comme étant horizontal et comprenant une direction longitudinale X, dans le sens de la pente, et une direction transversale Y, perpendiculaire à la direction longitudinale X et donc transversale à la pente. On définit également une direction verticale Z perpendiculaire au plan horizontal P et aux directions longitudinale X et transversale Y.

Le système de récupération d'énergie solaire 5 comprend plusieurs panneaux de récupération d'énergie solaire 6, dont six sont représentés sur la figure 1.

Les panneaux de récupération d'énergie solaire 6 sont, par exemple, constitués par des panneaux photovoltaïques. Chaque panneau photovoltaïque 6 comprend un réseau de cellules photovoltaïques qui génèrent une énergie électrique à partir de la lumière du soleil, et un circuit électrique connecté à un réseau électrique pour transporter l'énergie électrique générée par les cellules photovoltaïques. Chaque panneau photovoltaïque 6 présente un contour rectangulaire avec deux grands bords 7 opposés et parallèles entre eux le long des grands côtés du contour, et deux petits bords 8 opposés et parallèles entre eux, perpendiculaires aux grands bords 7, le long des petits côté du contour.

Les panneaux photovoltaïques 6 sont disposés sur le pan 3 de la charpente 2 de manière adjacente selon les directions longitudinale X et transversale Y, dans une configuration dite portrait avec les grands bords 7 qui forment des bords longitudinaux selon la direction longitudinale X, et les petits bords 8 qui forment des bords transversaux selon la direction transversale Y. En variante, les panneaux photovoltaïques 6 pourraient être disposés dans une configuration dite paysage avec les grands bords 7 qui forment des bords transversaux selon la direction transversale Y et les petits bords 8 qui forment des bords longitudinaux selon la direction longitudinale X.

Pour ce faire, les panneaux photovoltaïques 6 sont montés sur la charpente 2 du toit par l'intermédiaire d'une structure de montage comprenant des profilés de montage 10 s'étendant selon la direction longitudinale X et des traverses 40 s'étendant selon la direction transversale Y pour définir un quadrillage présentant des mailles dans lesquelles les panneaux photovoltaïques 6 sont disposés.

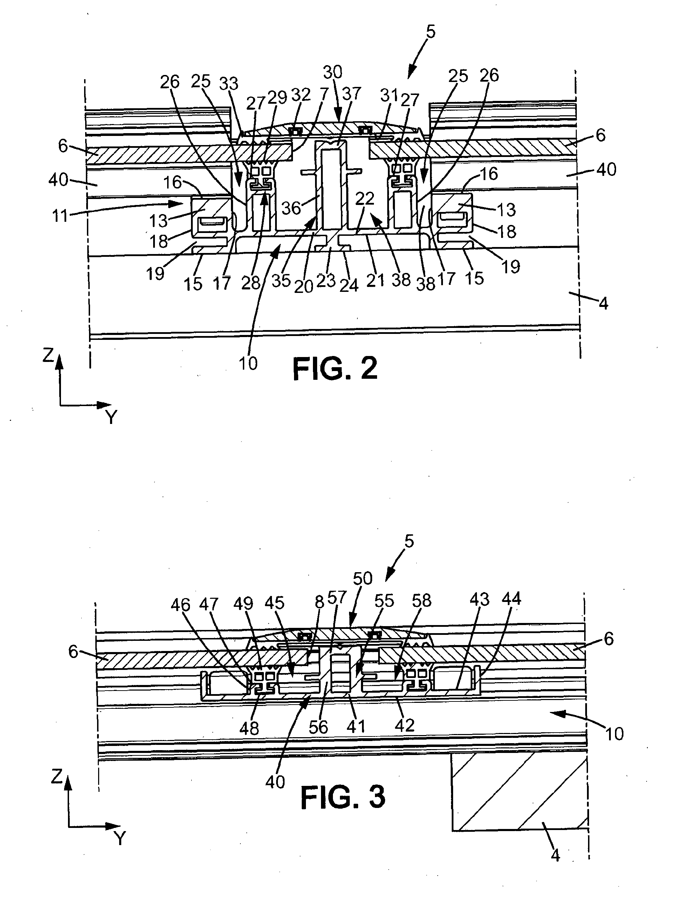

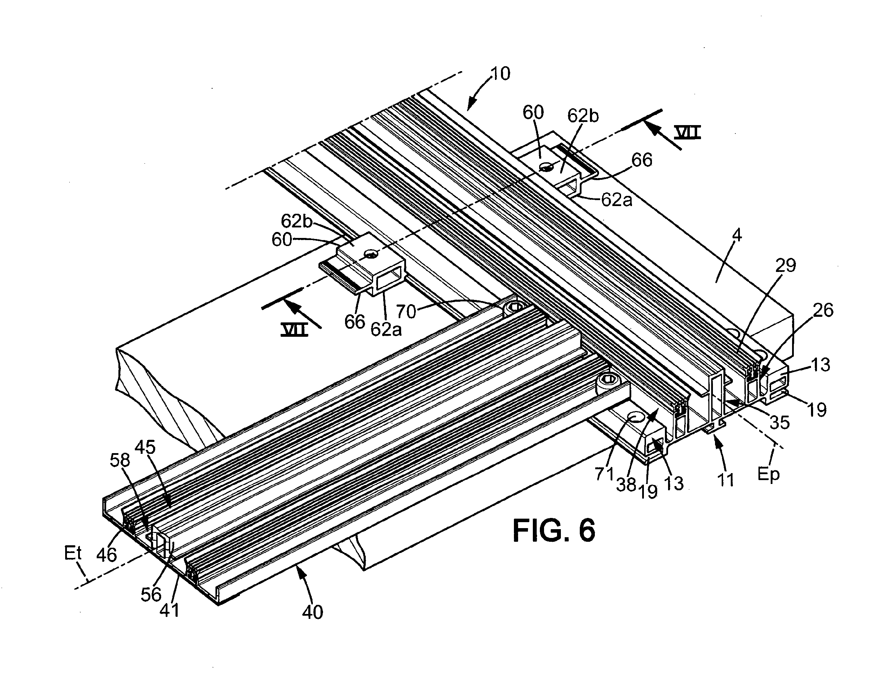

Le profilé de montage 10 représenté en section transversale sur la figure 2 et en perspective sur la figure 6 est un profilé, par exemple métallique et notamment en aluminium extrudé, qui s'étend selon une direction d'extension Ep dans laquelle il présente une longueur.

Dans le mode de réalisation représenté, la direction d'extension Ep du profilé de montage 10 correspond à la direction longitudinale X. Le profilé de montage 10 est alors décrit ci-après avec son agencement particulier dans l'installation 1 de la figure 1, c'est-à-dire en relation avec les directions longitudinale X, transversale Y et verticale Z prédéfinies. La description est, toutefois, transposable au profilé de montage 10 selon toute autre orientation en considérant que :
- la direction longitudinale X correspond à la direction d'extension Ep du profilé de montage 10,
- la direction transversale Y correspond à une première direction perpendiculaire à la direction d'extension Ep du profilé de montage 10 et comprise dans un même plan de référence du profilé de montage 10 que la direction d'extension Ep,
- la direction verticale Z correspond à une deuxième direction perpendiculaire au plan de référence du profilé de montage 10 et donc à la direction d'extension Ep ainsi qu'à la première direction.

Dans le mode de réalisation illustré, le profilé de montage 10 présente une symétrie par rapport à un plan longitudinal XZ médian. Les termes « intérieur » et « extérieur » relatif au profilé de montage 10 feront alors référence à des éléments placés respectivement à proximité et à distance du plan longitudinal XZ médian.

En particulier, le profilé de montage 10 comporte un socle 11 qui comprend deux longerons 13 longitudinaux, écartés l'un de l'autre selon la direction transversale Y et reliés l'un à l'autre par une paroi 20 horizontale. Chacun des longerons 13 présente une section rectangulaire avec des surfaces inférieure 15 et supérieure 16 s'étendant dans des plans horizontaux XY et des surfaces latérales intérieure 17 et extérieure 18 s'étendant dans des plans longitudinaux XZ entre les surfaces inférieure 15 et supérieure 16. La paroi 20 présente des surfaces inférieure 21 et supérieure 22 opposées. Sur la figure 2, la paroi 20 relie les surfaces latérales intérieures 17 des longerons 13, entre les surfaces inférieures 15 et supérieure 16 des longerons 13. La surface inférieure 21 de la paroi 20 est alors décalée selon la direction verticale Z par rapport aux surfaces inférieures 15 des longerons 13. Une semelle 23 en forme de T inversé s'étend depuis une partie centrale de la surface inférieure 21 de la paroi 20 et présente une surface inférieure 24 coplanaire aux surfaces inférieures 15 des longerons 13.

Les surfaces inférieures 15, 24 des longerons 13 et de la semelle 23 forment alors une surface de base plane, en particulier horizontale dans le mode de réalisation représenté, du socle 11 et définissent le plan de référence du profilé de montage 10. Dans d'autres modes de réalisation, la surface de base du socle pourrait être réalisée de manière différente, par exemple avec les surfaces inférieures des longerons 13 et de la paroi 20.

Sur chacune des surfaces latérales extérieures 18 des longerons 13, un premier élément d'ancrage sous la forme d'une rainure 19 s'étendant le long du socle 11 est prévue. La rainure 19 est parallèle à la surface de base du socle 11 est présente deux surfaces en regard s'étendant dans des plans horizontaux XY parallèles.

Le profilé de montage 10 comprend également deux parties de maintien 25 s'étendant selon la direction verticale Z, depuis le socle 11, pour maintenir les bords longitudinaux 7 de deux panneaux photovoltaïques 6 adjacents. Les parties de maintien 25 s'étendent parallèlement l'une à l'autre sur toute la longueur du profilé de montage 10. Dans d'autres modes de réalisation, le profilé de montage 10 pourrait ne comprendre qu'une seule partie de maintien 25.

Les parties de maintien 25 comprennent respectivement des surfaces d'appui 27 horizontales, opposées au socle 11, qui sont coplanaires et agencées à une distance verticale du socle 11 supérieure à celle des surfaces supérieures 16 des longerons 13. Dans le mode de réalisation représenté, chacune des surfaces d'appui 27 est formée par une surface supérieure d'un plot latéral 26 s'étendant selon la direction verticale Z depuis la surface supérieure 22 de la paroi 20 du socle 11. Les surfaces d'appui 27 des plots latéraux 26 sont, par ailleurs, pourvues chacune d'une rainure 28 pour l'encliquetage d'un joint d'étanchéité 29. Les bords longitudinaux 7 des panneaux photovoltaïques 6 peuvent alors reposer sur les surfaces d'appui 27 par l'intermédiaire des joints d'étanchéité 29.

Pour assurer le maintien, avantageusement de manière étanche, des bords longitudinaux 7 des panneaux photovoltaïques 6, les parties de maintien 25 sont en outre adaptées pour fixer une bride 30 assurant un contre-appui à l'opposé des surfaces d'appui 27.

Pour ce faire, un plot central 35, commun aux deux parties de maintien 25, est agencé entre les plots latéraux 26 et présente deux parois latérales 36 s'étendant verticalement depuis la surface supérieure 22 de la paroi 20 du socle 11, et une paroi supérieure 37 reliant les parois latérales 36 à l'opposé du socle 11, à une distance verticale supérieure à celle des surfaces d'appui 27 des plots latéraux 26. Dans le mode de réalisation représenté, le plot central 35 et les plots latéraux 26, d'une part, et les plots latéraux 26 et les longerons 13, d'autre part, définissent des conduites de drainage 38 pouvant recueillir et évacuer de l'eau s'infiltrant notamment par les bords longitudinaux 7 des panneaux photovoltaïques 6.

La bride 30 comprend deux surfaces de contre-appui 31 adaptées pour venir respectivement en regard des surfaces d'appui 27 et pouvoir appuyer sur les bords longitudinaux 7 des panneaux photovoltaïques 6 à l'opposé des surfaces d'appui 27. Les surfaces de contre-appui 31 comportent chacune une rainure 32 pour l'encliquetage d'un joint d'étanchéité 33. La bride peut alors être fixée au plot central 35 par l'intermédiaire de vis traversant la bride 30 et la paroi supérieure 37 du plot central 35. En variante, le plot central 35 pourrait être dépourvu de paroi supérieure 37 et présenter une gorge de vissage formée entre les parois latérales 36.

L'invention n'est pas limitée à la partie de maintien décrite précédemment et notamment à l'agencement particulier de la surface d'appui 27 et des conduites de drainage 38. Par exemple, la surface d'appui 27 pourrait être portée par le plot central 35, la conduite de drainage 38 étant formée entre le plot central 35 et le longeron 13.

De manière analogue au profilé de montage, la traverse 40 représentée en section transversale sur la figure 3 et en perspective sur la figure 6 est un profilé, par exemple métallique et notamment en aluminium extrudé, qui s'étend selon une direction d'extension Et dans laquelle elle présente une longueur.

Dans le mode de réalisation représenté, la direction d'extension Et de la traverse 40 correspond à la direction transversale Y. La traverse 40 est alors décrite ci-après avec son agencement particulier dans l'installation 1 de la figure 1, c'est-à-dire en relation avec les directions longitudinale X, transversale Y et verticale Z prédéfinies. La description est, toutefois, transposable à la traverse 40 selon toute autre orientation en considérant que :
- la direction transversale Y correspond à la direction d'extension Et de la traverse 40,
- la direction longitudinale X correspond à une première direction perpendiculaire à la direction d'extension Et de la traverse 40 et comprise dans un même plan de référence de la traverse 40 que la direction d'extension Et,
- la direction verticale Z correspond à une deuxième direction perpendiculaire au plan de référence de la traverse 40 et donc à la direction d'extension Et ainsi qu'à la première direction.

Dans le mode de réalisation illustré, la traverse 40 présente également une symétrie par rapport à un plan transversal YZ médian. Les termes « intérieur » et « extérieur » relatif à la traverse 40 feront alors référence à des éléments placés respectivement à proximité et à distance du plan transversal YZ médian.

En particulier, la traverse 40 comporte une plaque 41 horizontale, présentant des surfaces inférieure 42 et supérieure 43 opposées et deux bords longitudinaux opposés. La surface inférieure 42 forme une surface de base plane définissant le plan de référence de la traverse 40. Deux ailes 44 s'étendent selon la direction verticale Z respectivement depuis les bords longitudinaux de la plaque 41.

Comme le profilé de montage 10, la traverse 40 comprend deux parties de maintien 45 s'étendant selon la direction verticale Z, depuis la plaque 41, pour maintenir les bords transversaux 8 de deux panneaux photovoltaïques 6 adjacents. Les parties de maintien 45 s'étendent parallèlement l'une à l'autre sur toute la longueur de la traverse 40. Dans d'autres modes de réalisation, la traverse 40 pourrait ne comprendre qu'une seule partie de maintien 45.

Sans y être limité, chacune des parties de maintien 45 de la traverse 40 présente une structure analogue à celle du profilé de montage 10.

En particulier, les parties de maintien 45 comprennent respectivement des surfaces d'appui 47 horizontales, opposées à la plaque 41, qui sont coplanaires et formées respectivement par des surfaces supérieures de plots latéraux 46 s'étendant selon la direction verticale Z depuis la surface supérieure 43 de la plaque 41. Une rainure 48 pour l'encliquetage d'un joint d'étanchéité 49 est ménagée sur chacune des surfaces d'appui 47 des plots latéraux 46. Les bords transversaux 8 des panneaux photovoltaïques 6 peuvent alors reposer sur les surfaces d'appui 47 par l'intermédiaire des joints d'étanchéité 49.

Pour assurer le maintien, avantageusement de manière étanche, des bords transversaux 8 des panneaux photovoltaïques 6, les parties de maintien 45 sont en outre adaptées pour fixer une bride 50 assurant un contre-appui à l'opposé des surfaces d'appui 47.

Pour ce faire, un plot central 55, commun aux deux parties de maintien 45, est agencé entre les plots latéraux 46 et présente deux parois latérales 56 s'étendant verticalement depuis la surface supérieure 43 de la plaque 41, et une paroi supérieure 57 reliant les parois latérales 56 à l'opposé de la plaque 41, à une distance verticale supérieure à celle des surfaces d'appui 47 des plots latéraux 46. Dans le mode de réalisation représenté, le plot central 55 et chacun des plots latéraux 46 définissent une conduite de drainage 58 pouvant recueillir et évacuer de l'eau s'infiltrant par les bords transversaux 8 des panneaux photovoltaïques 6.

La bride 50 représentée a une structure identique à la bride 30 montée sur le profilé de montage 10 et décrite précédemment. La bride 50 peut alors être fixée au plot central 55 par l'intermédiaire de vis traversant la bride 50 et la paroi supérieure 57 du plot central 55. En variante, le plot central 55 pourrait être dépourvu de paroi supérieure 57 et présenter une gorge de vissage formée entre les parois latérales 56.

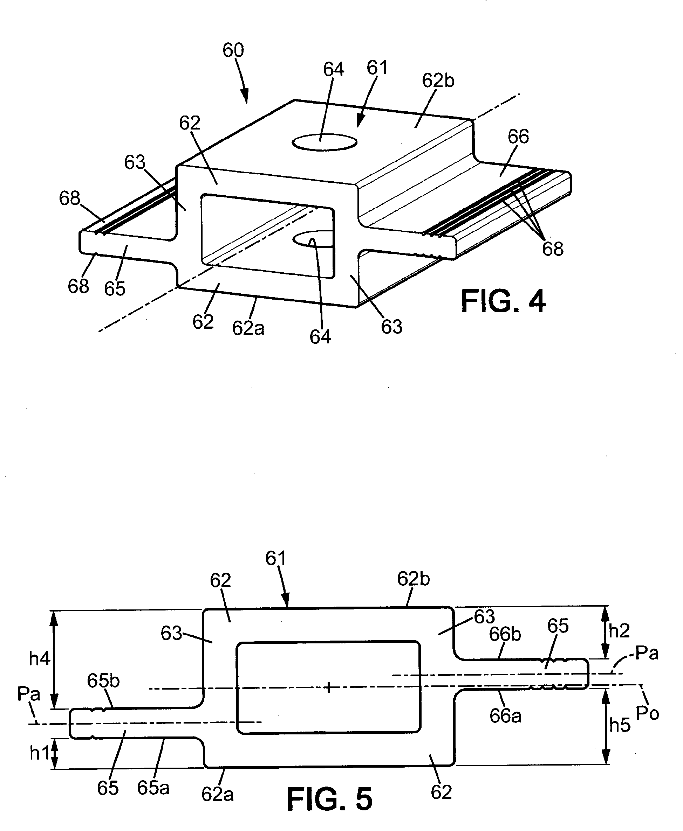

Pour fixer les profilés de montage 10 sur les pannes 4 de la charpente 2, la structure de montage comprend un ou plusieurs organes de fixation 60 dont un premier mode de réalisation est représenté sur les figures 4 et 5.

Chacun des organes de fixation 60 est constitué par une pièce, par exemple métallique et notamment en aluminium extrudé, adaptée pour fixer localement une partie du profilé de montage 10 à une patrie de l'une des pannes 4 de la charpente 2.

L'organe de fixation 60 comporte un corps 60 qui, dans le premier mode de réalisation, est cylindrique selon un axe A, creux. Le corps 60 présente en particulier une section rectangulaire et comprend deux parois d'appui 62 parallèles entre elles et reliées l'une à l'autre par deux parois latérales 63. Les parois d'appui 62 présentent respectivement des surfaces extérieures planes, parallèles entre elles et opposées formant des première 62a et deuxième 62b surfaces d'appui agencées pour pouvoir reposer sur la panne 4 de la charpente 2. Les parois d'appui 62 comportent également respectivement des trous 64 placés en correspondance, par exemple de manière centrale, pour pouvoir fixer l'organe de fixation 60 sur la charpente, notamment par vissage.

Les parois latérales 63 présentent quant à elles des surfaces latérales extérieures depuis lesquelles s'étendent respectivement des première 65 et deuxième 66 ailettes. Les première 65 et deuxième 66 ailettes s'étendent parallèlement aux première 62a et deuxième 62b surfaces d'appui, dans des sens opposés. Les première 65 et deuxième 66 ailettes présentent une forme, par exemple rectangulaire, et des dimensions adaptées pour pouvoir pénétrer et être retenues dans les rainures 19 du profilé de montage 10. Les première 65 et deuxième 66 ailettes forment alors des deuxièmes éléments d'ancrage adaptés pour coopérer avec les rainures 19 du profilé de montage 10 comme premiers éléments d'ancrage en vue de fixer le profilé de montage 10 sur la charpente 2. En variante, l'organe de fixation 60 pourrait ne présenter qu'une seule ailette ou plus d'une ailette sur chaque paroi latérale 63.

Comme il apparaît particulièrement de la figure 5, chacune des première 65 et deuxième 66 ailettes présente un plan médian Pa, parallèle aux première 62a et deuxième 62b surfaces d'appui de l'organe de fixation 60, décalé par rapport à un plan médian Po de l'organe de fixation 60, également parallèle aux première 62a et deuxième 62b surfaces d'appui de l'organe de fixation 60. Les première 65 et deuxième 66 ailettes sont disposées de part et d'autre du plan médian Po de l'organe de fixation 60, étant entendu qu'elles pourraient se trouver du même côté de ce plan médian Po.

De cette manière, la première ailette 65 présente des première 65a et deuxième 65b surfaces d'ancrage opposées, parallèles aux première 62a et deuxième 62b surfaces d'appui et agencées respectivement à des hauteurs différentes par rapport aux première 62a et deuxième 62b surfaces d'appui. De la même manière, la deuxième ailette 66 présente des première 66a et deuxième 66b surfaces d'ancrage opposées, parallèles aux première 62a et deuxième 62b surfaces d'appui et agencées respectivement à des hauteurs différentes par rapport aux première 62a et deuxième 62b surfaces d'appui. En outre, les première 65 et deuxième 66 ailettes sont elles-mêmes placées à des distances différentes du plan médian Po de l'organe de fixation 60 de sorte que la hauteur de la première surface d'ancrage 66a de la deuxième ailette 66 par rapport à la première surface d'appui 62a est différente de celle de la première ailette 65, et la hauteur de la deuxième surface d'ancrage 66b de la deuxième ailette 66 par rapport à la deuxième surface d'appui 62b est différente de celle de la première ailette 65.

En particulier, dans le mode de réalisation représenté sur les figures 4 et 5, l'organe de fixation 60 permet d'obtenir les hauteurs suivantes classées par ordre croissant :
- h1, hauteur de la première surface d'ancrage 65a de la première ailette 65 par rapport à la première surface d'appui 62a,
- h2, hauteur de la deuxième surface d'ancrage 66b de la deuxième ailette 66 par rapport à la deuxième surface d'appui 62b,
- h3, hauteur de la première surface d'ancrage 66a de la deuxième ailette 66 par rapport à la première surface d'appui 62a,
- h4, hauteur de la deuxième surface d'ancrage 65b de la première ailette 65 par rapport à la deuxième surface d'appui 62b.

Les différentes surfaces d'ancrage 65a, 65b, 66a, 66b peuvent être distinguées les unes des autres et identifiées au moyen d'éléments de repérage se présentant par exemple sous la forme de gorges 68.

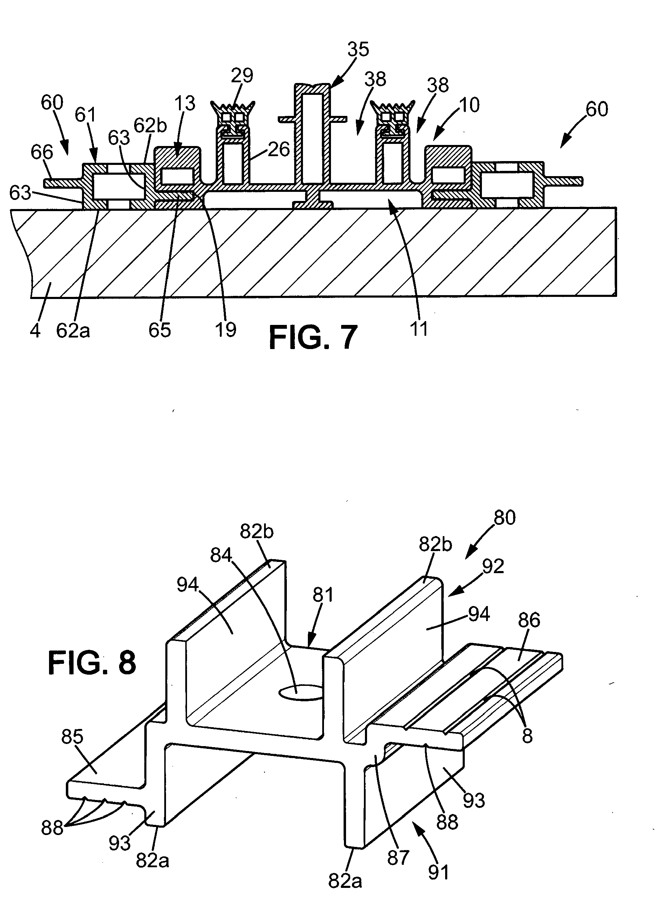

En relation avec les figures 6 et 7, on décrit maintenant un procédé de montage d'un panneau photovoltaïque 6 sur la charpente 2 par l'intermédiaire de la structure de montage décrite précédemment, en vue de réaliser l'installation 1 de la figure 1.

La surface de base du socle 11 du profilé de montage 10 constituée par les surfaces inférieures 15, 24 des longerons 13 et de la semelle 23 est posée sur les pannes 2 de la charpente 2.

Du fait d'un défaut de planéité de la charpente 2 le long de la pente sur la longueur du pan 3, le socle 11 du profilé de montage 10 peut se trouver à des distances variables des pannes 4.

L'organe de fixation 60 est orienté et positionné sur la panne 4 en choisissant l'une des première 65 et deuxième 66 ailettes devant pénétrer dans la rainure 19 et l'une des première 62a et deuxième 62b surfaces d'appui sur laquelle l'organe de fixation 60 doit reposer sur la panne 4, en fonction de la distance à l'endroit considéré entre le socle 11 et la panne 4.

En particulier, si comme représenté sur les figures 6 et 7, le socle 11 repose sur la panne 4, la première ailette 65 dont la première surface d'ancrage 65a est située à la hauteur h1 par rapport à la première surface d'appui 62a correspondant à une épaisseur d'une partie du longeron 13 située sous la rainure 19 est utilisée pour fixer le profilé de montage 10. L'organe de fixation 60 est alors orienté pour que la surface latérale portant la première ailette 65 soit placée en regard de la surface latérale 18 du longeron 13 du socle 11 et que la première surface d'appui 62a repose sur la panne 4. La première ailette 65 est introduite dans la rainure 19 du socle 11.

Si à un autre endroit, notamment sur une panne 4 voisine, le socle 11 du profilé de montage 10 se trouve à une distance de la panne 4 correspondant à la hauteur h2, il suffit d'orienter l'organe de fixation 60 pour que la surface latérale portant la deuxième ailette 66 soit placée en regard de la surface latérale 18 du longeron 13 du socle 11 et que la deuxième surface d'appui 62b repose sur la panne 4. De même, pour une distance correspondant à la hauteur h3, l'organe de fixation 60 est orienté pour que la surface latérale portant la deuxième ailette 66 soit placée en regard de la surface latérale 18 du longeron 13 du socle 11 et que la première surface d'appui 62a repose sur la panne 4. Enfin, pour une distance correspondant à la hauteur h4, l'organe de fixation 60 est orienté pour que la surface latérale portant la première ailette 65 soit placée en regard de la surface latérale 18 du longeron 13 du socle 11 et que la deuxième surface d'appui 62b repose sur la panne 4.

Il apparaît de ce qui précède que les première 65 et deuxième 66 ailettes, d'une part, et la rainure 19, d'autre part, forment respectivement un élément mâle et un élément femelle coopérant l'un avec l'autre, c'est-à-dire que l'élément mâle est adapté pour s'insérer dans l'élément femelle, et réciproquement l'élément femelle est adapté pour recevoir l'élément mâle, en vue de fixer le profilé de montage 10 sur la charpente 2.

L'invention n'est toutefois pas limitée à la réalisation d'un élément femelle sous la forme d'une rainure et d'un élément mâle sous la forme d'une ailette, les premier et deuxième éléments d'ancrage pouvant présenter toute forme appropriée pour assurer la fixation du profilé de montage 10 sur la charpente 2 par coopération, et notamment par emboîtement ou emmanchement, d'un élément mâle et d'un élément femelle. En outre, l'agencement des éléments mâle et femelle pourrait être inversé par rapport à celui décrit précédemment. Le profilé de montage 10 pourrait, en effet, présenter un élément mâle, tel qu'une ailette ou autre, et l'organe de fixation 60 pourrait présenter un ou plusieurs éléments femelles, tel qu'une rainure ou autre, décalés par rapport au plan médian Po de l'organe de fixation 60.

Une fois positionné de manière appropriée, l'organe de fixation 60 est fixé sur la panne 4 au moyen d'une vis traversant les trous 64. De la même manière, un autre organe de fixation 60 est placé, par exemple de manière symétrique, dans l'autre rainure 19 du socle 11. Bien que décrits pour compenser un défaut de planéité dans le sens de la pente, les organes de fixation 60 peuvent être utilisés pour compenser un défaut de planéité transversalement à la pente, les organes de fixation 60 situés de part et d'autre du profilé de montage 10 présentant des orientations différentes.

La traverse 40 peut ensuite être montée entre deux profilés de montage 10, la surface inférieure 42 de la plaque 41 reposant sur la surface supérieure 16 de l'un des longerons 13 de chacun des profilés de montage 10. La traverse 40 est positionnée pour que les conduites de drainage 58 débouchent dans les conduites de drainage 38 des profilés de montage 10 formées entre les longerons 13 et les plots latéraux 26. La traverse 40 peut être fixée aux profilés de montage 10 par exemple au moyen de vis 70 traversant la plaque 41 et s'étendant dans des trous 71 ou des gorges de vissage ménagés sur les longerons 13 des socles 11 des profilés de montage 10.

Les bords longitudinaux 7 et transversaux 8 du panneau de récupération 6 peuvent alors être maintenus sur les parties de maintien 25, 45 des profilés de montage 10 et des traverses 40 coopérant avec les brides 30, 50 comme décrit précédemment.

Les figures 8 à 11 représentent un organe de fixation 80 selon un deuxième mode de réalisation utilisé de manière analogue à celle décrite précédemment en relation avec l'organe de fixation 60 selon le premier mode de réalisation.

L'organe de fixation 80 comporte un corps 81 qui se présente sous la forme d'une plaque s'étendant par exemple sensiblement dans le plan médian Po de l'organe de fixation 80. Le corps 81 est pourvu d'un trou 84, placé par exemple de manière centrale, pour pouvoir fixer l'organe de fixation 80 sur la charpente 2, notamment par vissage.

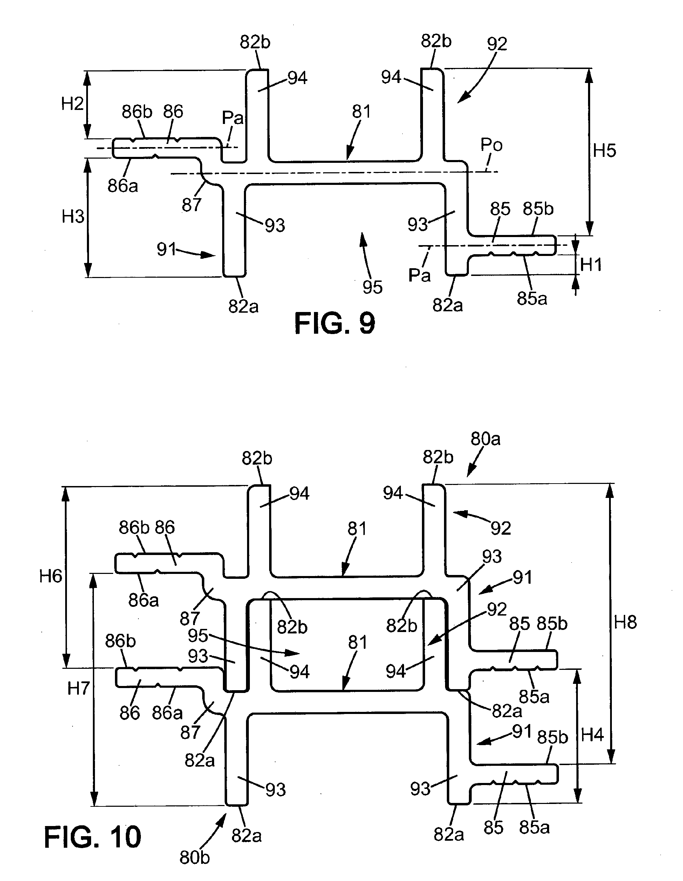

Sur des première et deuxième faces opposées, l'organe de fixation 80 comprend des premier 91 et deuxième 92 pieds s'étendant perpendiculairement depuis le corps 81 et portant respectivement des première 82a et deuxième 82b surfaces d'appui agencées pour pouvoir reposer sur la panne 4 de la charpente 2 comme expliqué précédemment. En outre, le premier pied 91 comporte un évidement 95 ménagé dans la première surface d'appui 82a et adapté pour recevoir le deuxième pied 92 d'un autre organe de fixation identique comme représenté sur la figure 10. Les premier 91 et deuxième 92 pieds forment alors des éléments de positionnement adaptés pour caler un premier organe de fixation 80a sur un deuxième organe de fixation 80b identique lorsque lesdits organes de fixation sont superposés.

Dans le mode de réalisation particulier représenté, le premier pied 91 est formé de deux parois 93 parallèles dont des extrémités libres respectives présentent des surfaces planes coplanaires définissant la première surface d'appui 82a. De la même manière, le deuxième pied 92 est formé de deux parois 94 parallèles dont les extrémités libres respectives présentent des surfaces planes coplanaires définissant la deuxième surface d'appui 82b. Les parois 93 du premier pied 91 présentent des surfaces intérieures en regard définissant l'évidement 95 et espacées l'une de l'autre d'un écartement correspondant à un écartement entre des surfaces extérieures des parois 94 du deuxième pied 92.

L'organe de fixation 80 comprend également des deuxièmes éléments d'ancrage sous la forme de première 85 et deuxième 86 ailettes s'étendant parallèlement aux première 82a et deuxième 82b surfaces d'appui depuis des surfaces latérales opposées. En variante, l'organe de fixation 80 pourrait ne présenter qu'une seule ailette ou plus d'une ailette sur chaque surface latérale.

La première ailette 85 s'étend perpendiculairement depuis une surface latérale extérieure de l'une des parois 93 du premier pied 91 et présente alors un plan médian Pa décalé par rapport au plan médian Po de l'organe de fixation 80. La première ailette 85 présente des première 85a et deuxième 85b surfaces d'ancrage du côté respectivement des première 82a et deuxième 82b surfaces d'appui. La deuxième ailette 86 présente également un plan médian Pa décalé par rapport au plan médian Po de l'organe de fixation 80. La deuxième ailette 86 s'étend de l'autre côté du plan médian Po au voisinage du corps 81 auquel elle est raccordée par un décrochement 87 formant un creux à la base de l'une des parois 94 du deuxième pied 92 de l'organe de fixation 80. La deuxième ailette 86 présente des première 86a et deuxième 86b surfaces d'ancrage du côté respectivement des première 82a et deuxième 82b surfaces d'appui. Comme pour le premier mode de réalisation, les première 85 et deuxième 86 ailettes sont elles-mêmes placées à des distances différentes du plan médian Po de l'organe de fixation 80.

Comme indiqué ci-dessus et comme illustré sur la figure 10, deux organes de fixation 80a, 80b peuvent être superposés. Par exemple, le premier organe de fixation 80a peut être placé sur le deuxième organe de fixation 80b avec la première surface d'appui 82a reposant sur le corps 81 du deuxième organe de fixation 80b, l'une des parois 93 du premier pied 91 du premier organe de fixation 80a étant placé dans le creux du décrochement 87 et les parois 94 du deuxième pied 92 du deuxième organe de fixation 80b étant placés dans l'évidement 95 entre les parois 93 du premier pied 91 du premier organe de fixation 80a.

Il est à noter qu'une superposition d'organes de fixation 60 selon le premier mode de réalisation est possible, le positionnement relatif des organes de fixation 60 pouvant être obtenu par une vis traversant les trous 64. Un évidement pourrait en outre être formé sur la première surface d'appui 62a pour recevoir par exemple la paroi d'appui 62 portant la deuxième surface d'appui 62b.

Avec les configurations représentées sur les figures 9 et 10, le ou les organes de fixation 80 permettent d'obtenir les hauteurs suivantes classées par ordre croissant :
- H1, hauteur de la première surface d'ancrage 85a de la première ailette 85 par rapport à la première surface d'appui 82a de l'un des organes de fixation,
- H2, hauteur de la deuxième surface d'ancrage 86b de la deuxième ailette 86 par rapport à la deuxième surface d'appui 82b de l'un des organes de fixation,
- H3, hauteur de la première surface d'ancrage 86a de la deuxième ailette 86 par rapport à la première surface d'appui 82a de l'un des organes de fixation,
- H4, hauteur de la première surface d'ancrage 85a de la première ailette 85 du premier organe de fixation 80a par rapport à la première surface d'appui 82a du deuxième organe de fixation 80b,
- H5, hauteur de la deuxième surface d'ancrage 85b de la première ailette 85 par rapport à la deuxième surface d'appui 82b de l'un des organes de fixation,
- H6, hauteur de la deuxième surface d'ancrage 86a de la deuxième ailette 86 du deuxième organe de fixation 80b par rapport à la deuxième surface d'appui 82b du premier organe de fixation 80a,
- H7, hauteur de la première surface d'ancrage 86a de la deuxième ailette 86 du premier organe de fixation 80a par rapport à la première surface d'appui 82a du deuxième organe de fixation 80b,
- H8, hauteur de la deuxième surface d'ancrage 85a de la première ailette 85 du deuxième organe de fixation 80b par rapport à la deuxième surface d'appui 82b du premier organe de fixation 80a.

Pour faciliter l'orientation relative des organes de fixation en vue de leur superposition mais également pour identifier les différentes hauteurs, les première 85a, 86a et deuxième 85b, 86b surfaces d'ancrage présentent des éléments de repérage 88, par exemple sous la forme de gorges.

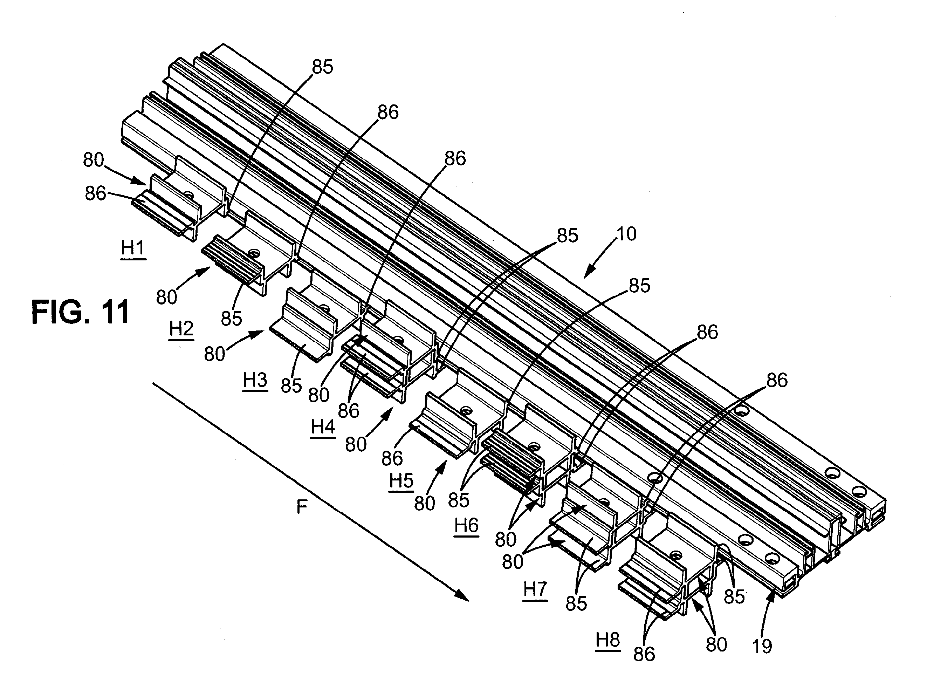

La figure 11 illustre les différents agencements d'un ou plusieurs organes de fixation 80 pour obtenir les hauteurs définies ci-dessus permettant d'adapter la hauteur de l'ailette 85, 86 à la distance entre le socle 11 du profilé de montage 10 et la panne 4. Sur la figure 11, les différents agencements sont représentés dans une disposition selon l'ordre croissant dans le sens de la flèche F, de manière rapprochée, étant entendu que, dans l'installation 1, seuls certains des agencements peuvent être utilisés, dans un ordre différent, et la distance entre les différents agencements peut être adaptée.

Pour des distances entre le socle 11 du profilé de montage 10 et la panne 4 correspondant aux hauteurs H1, H2, H3 et H5, un seul organe de fixation 80 orienté de manière analogue à celle décrite pour les hauteurs h1, h2, h3 et h4 du premier mode de réalisation suffit.

Pour des distances entre le socle 11 du profilé de montage 10 et la panne 4 correspondant aux hauteurs H4, H6, H7 et H8, le premier organe de fixation 80a est superposé au deuxième organe de fixation 80b. Pour une distance correspondant à la hauteur H4, les organes de fixation sont orientés pour que les surfaces latérales portant les premières ailettes 85 soient placées en regard de la surface latérale 18 du socle 11 et que la première surface d'appui 82a du deuxième organe de fixation 80b repose sur la panne 4. Pour une distance correspondant à la hauteur H6, les organes de fixation sont orientés pour que les surfaces latérales portant les deuxièmes ailettes 86 soient placées en regard de la surface latérale 18 du socle 11 et que la deuxième surface d'appui 82b du premier organe de fixation 80a repose sur la panne 4. Pour une distance correspondant à la hauteur H7, les organes de fixation sont orientés pour que les surfaces latérales portant les deuxièmes ailettes 86 soient placées en regard de la surface latérale 18 du socle 11 et que la première surface d'appui 82a du deuxième organe de fixation 80b repose sur la panne 4. Pour une distance correspondant à la hauteur H8, les organes de fixation sont orientés pour que les surfaces latérales portant les premières ailettes 85 soient placées en regard de la surface latérale 18 du socle 11 et que la deuxième surface d'appui 82b du premier organe de fixation 80a repose sur la panne 4.

## Revendications

1. Structure de montage pour monter au moins un panneau de récupération d'énergie solaire (6) sur un support (2), ledit panneau de récupération (6) présentant au moins un bord (7), ladite structure de montage comprenant :
- au moins un profilé de montage (10) qui comporte :
un socle (11) présentant une surface de base (15, 24) plane et destinée à reposer sur le support (2), ledit socle (11) comprenant au moins un premier élément d'ancrage (19) formant l'un des éléments choisis parmi un élément mâle et un élément femelle adaptés pour coopérer l'un avec l'autre, ledit premier élément d'ancrage (19) s'étendant parallèlement à la surface de base (15, 24),
une partie de maintien (25) s'étendant perpendiculairement à la surface de base (15, 24) du socle (11) et adaptée pour maintenir le bord (7) du panneau de récupération (6),
- au moins un organe de fixation (60 ; 80) adapté pour fixer localement le profilé de montage (10) au support (2), ledit organe de fixation (60 ; 80) étant adapté pour être fixé sur le support (2) et présentant une première surface d'appui (62a ; 82a) plane agencée pour pouvoir reposer sur le support (2), ledit organe de fixation (60 ; 80) comprenant au moins un deuxième élément d'ancrage (65, 66 ; 85, 86) formant l'autre élément choisi parmi ledit élément mâle et ledit élément femelle, ledit deuxième élément d'ancrage (65, 66 ; 85, 86) s'étendant parallèlement à la première surface d'appui (62a ; 82a),
ladite structure de montage étant **caractérisée en ce que** l'organe de fixation (60 ; 80) présente une deuxième surface d'appui (62b ; 82b) plane, parallèle et opposée à la première surface d'appui (62a ; 82a), ladite deuxième surface d'appui (62b ; 82b) étant agencée pour pouvoir reposer sur le support (2), l'organe de fixation (60 ; 80) étant adapté pour que le deuxième élément d'ancrage (65, 66 ; 85, 86) coopère avec le premier élément d'ancrage (19) lorsque la première surface d'appui (62a ; 82a) repose sur le support (2) et lorsque la deuxième surface d'appui (62b ; 82b) repose sur le support (2), le deuxième élément d'ancrage (65, 66 ; 85, 86) étant décalé par rapport à un plan médian (Po) de l'organe de fixation (60 ; 80) parallèle aux première (62a ; 82a) et deuxième (62b ; 82b) surfaces d'appui.

2. Structure de montage selon la revendication 1, dans laquelle l'organe de fixation (60 ; 80) comprend deux deuxièmes éléments d'ancrage (65, 66 ; 85, 86) s'étendant dans des sens opposés et placés à des distances différentes du plan médian (Po).

3. Structure de montage selon l'une quelconque des revendications 1 et 2, dans laquelle le deuxième élément d'ancrage (65, 66 ; 85, 86) présente deux surfaces d'ancrage (65a, 65b, 66a, 66b ; 85a, 85b, 86a, 86b) parallèles aux première (62a ; 82a) et deuxième (62b ; 82b) surfaces d'appui, au moins l'une des surfaces d'ancrage (65a, 66a, 66b ; 85a, 86a) portant un élément de repérage (68 ; 88) distinguant ladite surface d'ancrage (65a, 66a ; 85a, 86a) de l'autre surface d'ancrage (65b, 66b ; 85b, 86b).

4. Structure de montage selon l'une quelconque des revendications 1 à 3, dans laquelle le premier élément d'ancrage (19) forme l'élément femelle ménagé sur une surface latérale (18) du socle (11) du profilé de montage (10) et le deuxième élément d'ancrage (65, 66 ; 85 ; 86) forme l'élément mâle s'étendant depuis une surface latérale de l'organe de fixation (60 ; 80) destinée à être placée en regard de la surface latérale (18) du socle (11).

5. Structure de montage selon la revendication 4, dans laquelle le premier élément d'ancrage est une rainure (19) s'étendant le long du socle (11) du profilé de montage (10) et le deuxième élément d'ancrage est une ailette (65, 66 ; 85, 86).

6. Structure de montage selon l'une quelconque des revendications 1 à 5, dans laquelle l'organe de fixation (80a) comprend des éléments de positionnement (91, 92) adaptés pour caler ledit organe de fixation (80a) sur un autre organe de fixation (80b) identique lorsque lesdits organes de fixation (80a ; 80b) sont superposés.

7. Structure de montage selon la revendication 6, dans laquelle les éléments de positionnement comprennent des premier (91) et deuxième (92) pieds formés respectivement sur des première et deuxième faces opposées de l'organe de fixation (80a), lesdits premier (91) et deuxième (92) pieds portant respectivement les première (82a) et deuxième (82b) surfaces d'appui, le premier pied (91) comportant un évidement (95) ménagé dans la première surface d'appui (82a) et adapté pour recevoir le deuxième pied (92) de l'autre organe de fixation (80b) identique.

8. Système de récupération d'énergie solaire (5) comprenant une structure de montage selon l'une quelconque des revendications 1 à 7 et au moins un panneau de récupération d'énergie solaire (6), ledit panneau de récupération (6) présentant au moins un bord (7) maintenu dans la partie de maintien (25) du profilé de montage (10).

9. Installation comprenant un support (2) et un système de récupération d'énergie solaire (5) selon la revendication 8, la surface de base (15, 24) du socle (11) du profilé de montage (10) reposant sur le support (2), l'organe de fixation (60) étant fixé au support (2), l'une des première (62a ; 82a) et deuxième (62b ; 82b) surfaces d'appui reposant sur le support (2) et le deuxième élément d'ancrage (65, 66 ; 85, 86) coopérant avec le premier élément d'ancrage (19).

10. Procédé de montage d'au moins un panneau de récupération d'énergie solaire (6) sur un support (2) par l'intermédiaire d'une structure de montage selon l'une quelconque des revendications 1 à 7, ledit procédé de montage comprenant les étapes consistant à :
A- poser la surface de base (15, 24) du socle (11) du profilé de montage (10) sur le support (2),
B- choisir l'une des première (62a ; 82a) et deuxième (62b ; 82b) surfaces d'appui de l'organe de fixation (60 ; 80) en fonction d'une distance entre le socle (11) du profilé de montage (10) et le support (2), poser ladite surface d'appui (62a, 62b ; 82a, 82b) sur le support (2) et faire coopérer le premier élément d'ancrage (19) du profilé de montage (10) et le deuxième élément d'ancrage (65, 66 ; 85, 86) de l'organe de fixation (60 ; 80),
C- fixer l'organe de fixation (60 ; 80) sur le support (2),
D- maintenir un bord (7) du panneau de récupération (6) dans la partie de maintien (25) du profilé de montage (10).

11. Procédé de montage selon la revendication 10, dans lequel l'organe de fixation (60 ; 80) comprend deux deuxièmes éléments d'ancrage (65, 66 ; 85, 86) s'étendant dans des sens opposés et placés à des distances différentes du plan médian, l'étape B comprenant en outre : choisir une orientation de l'organe de fixation (60 ; 80) en fonction de la distance entre le socle (11) du profilé de montage (10) et le support (2).

## Patentansprüche

1. Montagestruktur, um wenigstens ein Solarenergie-Rückgewinnungsmodul (6) auf einen Träger (2) zu montieren, wobei das genannte Solarenergie-Rückgewinnungsmodul (6) wenigstens einen Rand (7) aufweist und die genannte Montagestruktur umfasst :
- wenigstens ein Montageprofil (10), umfassend :
einen Sockel (11) mit einer auf dem Träger (2) ruhenden ebenen Basisfläche (15, 24), wobei der genannte Sockel (11) wenigstens ein erstes Verankerungselement (19) umfasst, das eines der Elemente bildet, die ausgewählt werden zwischen einem Rippenelement und einem Nutelement, die so beschaffen sind, dass sie miteinander kooperieren, wobei das erste Verankerungselement (19) sich parallel zu der Basisfläche (15, 24) erstreckt,
ein sich senkrecht zu der Basisfläche (15, 24) des Sockels (11) erstreckender Halterteil (25), angepasst an das Festhalten des Rands (7) des Rückgewinnungsmoduls (6),
- wenigstens ein Fixierungsorgan (60 ; 80), angepasst an das örtliche Fixieren des Montageprofils auf dem Träger (2), wobei das genannte Fixierungsorgan (60 ; 80) so angepasst ist, dass es auf dem Träger (2) fixiert werden kann und dabei eine erste, ebene Stützfläche (62a ; 82a) aufweist, um auf dem Träger (2) ruhen zu können, wobei das genannte Fixierungsorgan (60 ; 80) wenigstens ein zweites Verankerungselement (65, 66 ; 85, 86) umfasst, welches das zwischen dem genannten Rippenelement und dem genannten Nutelement ausgewählte andere Element bildet, und das genannte zweite Verankerungselement (65, 66 ; 85, 86) sich dabei parallel zu der ersten Stützfläche (62a ; 82a) erstreckt,
wobei die genannte Montagestruktur **dadurch gekennzeichnet ist, dass** das Fixierungsorgan (60 ; 80) eine zweite ebene Stützfläche (62b ; 82b) aufweist, parallel und entgegengesetzt zu der ersten Stützfläche (62a ; 82a), wobei die genannte zweite Stützfläche (62b ; 82b) so angepasst ist, dass sie auf dem Träger (2) ruhen kann, das Fixierungsorgan (60 : 80) so angepasst ist, dass das zweite Verankerungselement (65, 66 ; 85, 86) mit dem ersten Verankerungselement (19) kooperiert, wenn die erste Stützfläche (62a ; 82a) auf dem Träger (2) ruht, und wenn die zweite Stützfläche (62b ; 82b) auf dem Träger (2) ruht, wobei das zweite Verankerungselement (65, 66 ; 85, 86) versetzt ist in Bezug auf eine Mittelebene (Po) des Fixierungselements (60 ; 80), parallel zur ersten (62a ; 82a) und zweiten (62b ; 82b) Stützfläche.

2. Montagestruktur nach Anspruch 1, bei der das Fixierungsorgan (60 ; 80) zwei Verankerungselemente (65, 66 ; 85, 86) umfasst, die sich in entgegengesetzten Richtungen erstrecken und unterschiedliche Abstände zur Mittelebene (Po) aufweisen.

3. Montagestruktur nach einem der Ansprüche 1 und 2, bei dem das zweite Verankerungselement (65, 66 ; 85, 86) zwei zu der ersten (62a ; 82a) und zweiten (62b ; 82b) Stützfläche parallele Verankerungsflächen (65a, 65b, 66a, 66b ; 85a, 85b, 86a, 86b) aufweist, wobei wenigstens eine der Verankerungsflächen (65a, 66a, 66b ; 85a, 86a) ein Markierungselement (68 ; 88) trägt, das die genannte Verankerungsfläche (65a, 66a ; 85a, 86a) von der anderen Verankerungsfläche (65b, 66b ; 85b, 86b) unterscheidet.

4. Montagestruktur nach einem der Ansprüche 1 bis 3, bei dem das erste Verankerungselement (19) das Nutelement bildet, ausgebildet in einer Seitenfläche (18) des Sockels (11) des Montageprofils (10), und das zweite Verankerungselement (65, 66 ; 85 ; 86) das Rippenelement bildet, das sich von einer Seitenfläche des Fixierungsorgans (60 ; 80) aus erstreckt, dazu bestimmt, gegenüber der Seitenfläche (18) des Sockels (11) platziert zu werden.

5. Montagestruktur nach Anspruch 4, bei der das erste Verankerungselement eine Nut (19) ist, die sich längs des Sockels (11) des Montagprofils (10) erstreckt, und das zweite Verankerungselement eine Rippe (65, 66 ; 85, 86) ist.

6. Montagestruktur nach einem der Ansprüche 1 bis 5, bei dem das Fixierungsorgan (80a) Positionierungselemente (91, 92) umfasst, dazu dienend, das genannte Fixierungsorgan (80a) auf ein anderes, identisches Fixierungsorgan (80b) zu stecken, wenn die genannten Fixierungsorgane (80a ; 80b) aufeinander gestellt werden.

7. Montagestruktur nach Anspruch 6, bei der die Positionierungselemente erste (91) und zweite (92) Füße umfassen, jeweils ausgebildet auf den entgegengesetzten ersten und zweiten Seiten des Befestigungsorgans (80a), wobei die genannten ersten (91) und zweiten (92) Füße jeweils erste (82a) und zweite (82b) Stützflächen umfassen, und der erste Fuß (91) in der Stützfläche (82a) eine Aussparung (95) zur Aufnahme des identischen anderen Fixierungsorgans (80b) umfasst.

8. Solarenergie-Rückgewinnungssystem (5) mit einer Montagestruktur nach einem der Ansprüche 1 bis 7 und wenigstens einem Solarenergie-Rückgewinnungsmodul (6), wobei das genannte Solarenergie-Rückgewinnungsmodul wenigstens einen in dem Halterteil (25) des Montageprofils (10) festgehaltenen Rand (7) aufweist.

9. Anlage mit einem Träger (2) und einem Solarenergie-Rückgewinnungssystem (5) nach Anspruch 8, wobei die Basisfläche (15, 24) des Sockels (11) des Montageprofils (10) auf dem Träger (2) ruht, dabei das Fixierungsorgan (60) an dem Träger (2) befestigt ist, eine der ersten (62a ; 82a) und zweiten (62b ; 82b) Stützflächen auf dem Träger (2) ruht und das zweite Verankerungselement (65, 66 ; 85, 86) mit dem ersten Verankerungselement (19) kooperiert.

10. Verfahren zur Montage wenigstens eines Solarenergie-Rückgewinnungsmoduls (6) auf einen Träger (2) mittels einer Montagestruktur nach einem der Ansprüche 1 bis 7, wobei dieses Montageverfahren die folgenden Schritte umfasst :
A - Aufsetzen der Basisfläche (15, 24) des Sockels (11) des Montageprofils (10) auf den Träger (2),
B - Wählen einer der ersten (62a ; 82a) und zweiten (62b ; 82b) Stützflächen des Fixierungsorgans (60 ; 80) in Abhängigkeit eines Abstands zwischen dem Sockel (11) des Montageprofils (10) und des Trägers (2), Aufsetzen der genannten Stützfläche (62a, 62b ; 82a, 82b) auf den Träger (2), so, dass das erste Verankerungselement (19) des Montageprofils (10) und das zweite Verankerungselement (65, 66 ; 85, 86) des Fixierungsorgans (60 ; 80) kooperieren,
C - Fixieren des Fixierungsorgans (60 ; 80) auf dem Träger (2),
D - Festhalten eines Rands (7) des Rückgewinnungsmoduls (6) in dem Halterteil (25) des Montageprofils (10).

11. Montageverfahren nach Anspruch 10, bei dem das Fixierungsorgan (60 ; 80) zwei zweite Verankerungselemente (65, 66 ; 85, 86) umfasst, die sich in entgegengesetzten Richtungen erstrecken und unterschiedliche Abstände von der Mittelebene haben, wobei der Schritt B außerdem umfasst : das Wählen einer Ausrichtung des Fixierungsorgans (60 ; 80) in Abhängigkeit von dem Abstand zwischen dem Sockel (11) des Montageprofils (10) und dem Träger (2).

## Claims

1. Mounting structure for mounting at least one solar energy recovery panel (6) on a support (2), said recovery panel (6) having at least one edge (7), said mounting structure comprising:
- at least one profiled mounting part (10) which comprises:
a base (11) having a planar bottom surface (15, 24) intended to rest on the support (2), said base (11) comprising at least one first anchoring element (19) forming one of the elements selected from a male element and a female element that are capable of cooperating with each other, said first anchoring element (19) extending in parallel with the bottom surface (15, 24),
a holding part (25) extending perpendicularly to the bottom surface (15, 24) of the base (11) and capable of holding the edge (7) of the recovery panel (6),
- at least one fixing member (60; 80) capable of locally fixing the profiled mounting part (10) to the support (2), said fixing member (60; 80) being capable of being fixed to the support (2) and having a first planar bearing surface (62a; 82a) that is arranged so that it can rest on the support (2), said fixing member (60; 80) comprising at least one second anchoring element (65, 66; 85; 86) forming the other element selected from said male element and said female element, said second anchoring element (65, 66; 85, 86) extending in parallel with the first bearing surface (62a; 82a),
said mounting structure being **characterised in that** the fixing member (60; 80) has a second planar bearing surface (62b; 82b) that is parallel to and opposite the first bearing surface (62a; 82a), said second bearing surface (62b; 82b) being arranged so that it can rest on the support (2), the fixing member (60; 80) being adapted so that the second anchoring element (65, 66; 85, 86) cooperates with the first anchoring element (19) when the first bearing surface (62a; 82a) rests on the support (2) and when the second bearing surface (62b; 82b) rests on the support (2), the second anchoring element (65, 66; 85, 86) being offset from a central plane (Po) of the fixing member (60; 80) that is parallel to the first (62a; 82a) and second (62b; 82b) bearing surfaces.

2. Mounting structure according to claim 1, wherein the fixing member (60; 80) comprises two second anchoring elements (65, 66; 85, 86) that extend in opposite directions and are positioned at different distances from the central plane (Po).

3. Mounting structure according to either claim 1 or claim 2, wherein the second anchoring element (65, 66; 85, 86) has two anchoring surfaces (65a, 65b, 66a, 66b; 85a, 85b, 86a, 86b) that are parallel to the first (62a; 82a) and second (62b; 82b) bearing surfaces, at least one of the anchoring surfaces (65a, 66a, 66b; 85a, 86a) bearing a marking element (68; 88) distinguishing said anchoring surface (65a, 66a; 85a, 86a) from the other anchoring surface (65b, 66b; 85b, 86b).

4. Mounting structure according to any of claims 1 to 3, wherein the first anchoring element (19) forms the female element on a lateral surface (18) of the base (11) of the profiled mounting part (10) and the second anchoring element (65, 66; 85; 86) forms the male element extending from a lateral surface of the fixing member (60; 80) intended to be positioned opposite the lateral surface (18) of the base (11).

5. Mounting structure according to claim 4, wherein the first anchoring element is a groove (19) which extends along the base (11) of the profiled mounting part (10), and the second anchoring element is a fin (65, 66; 85, 86).

6. Mounting structure according to any of claims 1 to 5, wherein the fixing member (80a) comprises positioning elements (91, 92) capable of locking said fixing member (80a) on another identical fixing member (80b) when said fixing members (80a; 80b) are superposed.

7. Mounting structure according to claim 6, wherein the positioning elements comprise first (91) and second (92) feet each formed on first and second faces opposite the fixing member (80a), said first (91) and second (92) feet each bearing the first (82a) and second (82b) bearing surfaces, the first foot (91) comprising a recess (95) that is made in the first bearing surface (82) and is capable of receiving the second foot (92) of the other identical fixing member (80b).

8. System (5) for recovering solar energy, comprising a mounting structure according to any of claims 1 to 7 and at least one solar energy recovery panel (6), said recovery panel (6) having at least one edge (7) held in the holding part (25) of the profiled mounting part (10).

9. Installation comprising a support (2) and a system (5) for recovering solar energy according to claim 8, the bottom surface (15, 24) of the base (11) of the profiled mounting part (10) resting on the support (2), the fixing member (60) being fixed to the support (2), one of the first (62a; 82a) and second (62b; 82b) bearing surfaces resting on the support (2) and the second anchoring element (65, 66; 85, 86) cooperating with the first anchoring element (19).

10. Method for mounting at least one solar energy recovery panel (6) on a support (2) by means of a mounting structure according to any of claims 1 to 7, said mounting method comprising the steps of:
A- positioning the bottom surface (15, 24) of the base (11) of the profiled mounting part (10) on the support,
B- selecting one of the first (62a; 82a) and second (62b; 82b) bearing surfaces of the fixing member (60; 80) depending on the distance between the base (11) of the profiled mounting part (10) and the support (2), positioning said bearing surface (62a, 62b; 82a, 82b) on the support (2) and making the first anchoring element (19) of the profiled mounting part (10) and the second anchoring element (65, 66; 85, 86) of the fixing member (60; 80) cooperate,
C- fixing the fixing member (60; 80) to the support (2),
D- holding an edge (7) of the recovery panel (6) in the holding part (25) of the profiled mounting part (10).

11. Method for mounting according to claim 10, wherein the fixing member (60; 80) comprises two second anchoring elements (65, 66; 85, 86) that extend in opposite directions and are positioned at different distances from the central plane, step B further including selecting an orientation for the fixing member (60; 80) depending on the distance between the base (11) of the profiled mounting part (10) and the support (2).
